# EUROPÄISCHE PATENTANMELDUNG

(11) **EP 4 142 129 A1**
(43) Veröffentlichungstag der Anmeldung: **01.03.2023**
(21) Anmeldenummer: 21194135.6
(22) Anmeldetag: 31.08.2021
(51) Int. Cl.: H02M 1/12, H02M 1/14, H02M 1/00, H02M 7/5387, H02M 7/493, H02M 7/00

(54) **EMV-FILTER EINER WINDENERGIEANLAGE**

(71) Anmelder: Wobben Properties GmbH, 26607 Aurich (DE)
(72) Erfinder: Wilhelm, Juri, 26607 Aurich (DE); Schulz, Sonja, 26607 Aurich (DE)
(74) Vertreter: Eisenführ Speiser

(57) **Zusammenfassung**

Die vorliegende Erfindung betrifft eine Filteranordnung für ein Umrichtermodul, insbesondere für ein Leistungsumrichtermodul einer Windenergieanlage, umfassend: einen magnetischen Kern, der ring- oder röhrenförmig, mit einer Öffnung, und aus wenigstens einem ferro- oder ferrimagnetischen Stoff ausgebildet ist, wobei der magnetische Kern dazu eingerichtet ist, wenigstens eine erste Phase des Umrichtermoduls und einen ersten Leiter einer Gleichspannung für das Umrichtermodul derart durch die Öffnung hindurch aufzunehmen, dass der magnetische Kern eine Drossel für das Umrichtermodul und eine Drossel für die Gleichspannung ausbildet.

## Beschreibung

Die vorliegende Erfindung betrifft eine Filteranordnung für ein Umrichtermodul, insbesondere für einen Umrichter einer Windenergieanlage.

Ferner betrifft die vorliegende Erfindung ein solches Umrichtermodul und eine, eine Vielzahl solcher Umrichtermodule aufweisende Umrichteranordnung einer Windenergieanlage sowie eine solche Windenergieanlage.

Umrichter, auch als Wechselstrom-Umrichter bezeichnet, sind Stromrichter, die aus einer Gleich- oder Wechselspannung eine in Frequenz und Amplitude verschiedene neue Wechselspannung generieren.

Um eine gewisse Qualität bei den, vom Umrichter erzeugten Strömen sicherzustellen, werden am Ausgang der Umrichter üblicherweise weitere elektrische Bauteile bzw. Schaltungen angeordnet, wie bspw. Filter, die eine stromkompensierende Drossel aufweisen.

Bekannte derartige Filter, also Filter mit einer stromkompensierenden Drossel, weisen aber nur einen eingeschränkten Einsatzbereich auf.

Umrichter werden zudem häufig parallel zu einer Umrichteranordnung höher Leistung verschaltet, bspw. im Bereich der Windenergieanlagen.

Die Umrichteranordnung umfasst dann eine Vielzahl von einzelnen Umrichtern, die auch als Umrichtermodule bezeichnet werden und funktional miteinander verschaltet sind.

Diese parallele Verschaltung von Umrichtern bzw. Umrichtermodulen zu einer solchen Umrichteranordnung führt aber häufig zu sogenannten Kreis- oder Ringströmen innerhalb der Umrichteranordnung, die die stromkompensierenden Drosseln der einzelnen Umrichter bzw. Umrichtermodule in die Sättigung treiben können.

Aufgabe der vorliegenden Erfindung ist es daher wenigstens eines der oben genannten Probleme zu adressieren. Insbesondere soll ein verbessertes Filter für Umrichter bzw. Umrichtermodule und/oder Umrichteranordnungen von Windenergieanlagen bereitgestellt werden.

Erfindungsgemäß wird somit eine Filteranordnung für ein Umrichtermodul vorgeschlagen, umfassend einen magnetischen Kern, der ring- oder röhrenförmig, mit einer Öffnung, und aus wenigstens einem ferro- oder ferrimagnetischen Stoff ausgebildet ist, wobei der magnetische Kern dazu eingerichtet ist, wenigstens eine erste Phase des Umrichtermoduls und einen ersten Leiter einer Gleichspannung für das Umrichtermodul derart durch die Öffnung hindurch aufzunehmen, dass der magnetische Kern eine Drossel für das Umrichtermodul und eine Drossel für die Gleichspannung ausbildet.

Es wird also insbesondere eine Filteranordnung für ein Umrichtermodul vorgeschlagen, die sowohl die Funktionalität einer Netzdrossel als auch die Funktionalität einer Gleichtaktdrossel aufweist. Hierfür werden bevorzugt alle, für das Umrichtermodul relevanten Leiter und Phasen durch die Öffnung des magnetischen Kerns geführt.

Die Filteranordnung weist hierfür, insbesondere genau, einen magnetischen Kern auf, der bspw. aus einer Kernkombination ausgebildet ist.

Der magnetische Kern ist bevorzugt ringförmig oder röhrenförmig und aus einem ferro- oder ferritmagnetischen Stoff, wie bspw. einem ferritmagnetischen keramischen Werkstoff. Bevorzugt ist der magnetische Kern aus Ferriten, insbesondere weichmagnetischen Ferriten, wie bspw. Nickel-Zink oder Mangan-Zink, ausgebildet.

Durch die ring- oder röhrenförmige Ausbildung des magnetischen Kerns weist der magnetische Kern wenigstens eine Öffnung auf, durch die entsprechenden Phasen und/oder Leiter, insbesondere kontaktfrei, geführt werden können. Bevorzugt stehen die Phasen und/oder Leiter dabei nicht in Kontakt mit dem magnetischen Kern. Der magnetische Kern ist also insbesondere nicht bzw. unbewickelt ausgeführt.

Durch die, durch den magnetischen Kern ausgebildete Öffnung wird wenigstens eine erste Phase des Umrichtermoduls und ein erster Leiter einer Gleichspannung für das Umrichtermodul geführt. Bevorzugt werden zwei Gleichspannungsleiter und drei Wechselspannungsphasen durch die Öffnung geführt. Es wird also sowohl eine Wechselspannung als auch eine Gleichspannung durch die Öffnung des magnetischen Kerns geführt.

Die Öffnung ist also dergestalt, dass wenigstens eine Phase eines Umrichtermoduls und ein Leiter einer Gleichspannung hindurchgeführt werden können.

Zudem ist der magnetische Kern derart ausgeführt, dass der magnetische Kern mit der wenigstens einen Phase eine Drossel für das Umrichtermodul ausbildet und mit dem wenigstens einen Leiter eine Drossel für die Gleichspannung ausbildet.

Bevorzugt bildet die Drossel mit der bzw. den Phasen eine Drossel für Netzanwendungen oder eine netzseitige Drossel oder eine Netzdrossel aus.

Bevorzugt bildet die Drossel mit dem bzw. den Leitern eine stromkompensierte Drossel oder Gleichtaktdrossel (engl. common mode choke) aus.

Die hierin beschriebene Filteranordnung umfasst also einen magnetischen Kern, der gleichzeitig für eine Drossel für Netzanwendungen und für eine Gleichtaktdrossel verwendet wird.

Eine derartige Filteranordnung ist besonders vorteilhaft für eine Vielzahl von parallelen Umrichtermodulen, bei denen es auf Grund der parallelen Verschaltung zu Ring- bzw. Kreisströmen kommen kann.

Die hierin beschriebene Filteranordnung führt dabei insbesondere zu einer Kompensation der Kreisströme innerhalb der parallelen Umrichtermodule bzw. der parallelen Umrichter und damit verbunden zu einer deutlich späteren Sättigung magnetischer Kerne der Filter am Ausgang der Umrichter bzw. Umrichtermodule.

Vorzugsweise ist der magnetische Kern dazu eingerichtet, eine erste Phase, eine zweite Phase und eine dritte Phase des Umrichtermoduls und einen ersten Leiter und einen zweiten Leiter der Gleichspannung für das Umrichtermodul derart durch die Öffnung hindurch aufzunehmen, dass der magnetische Kern eine Drossel für das Umrichtermodul und eine Drossel für die Gleichspannung ausbildet.

Es wird also insbesondere vorgeschlagen, alle drei Phasen des Umrichtermoduls und die zwei Leiter der Gleichspannung mit dem das Umrichtermodul verbunden ist, durch ein und dieselbe Öffnung des magnetischen Kerns zu führen.

Vorzugsweise ist der magnetische Kern als Kernkombination, insbesondere mehrteilig, ausgebildet.

Der magnetische Kern umfasst also bspw. ein, zwei, drei, vier oder mehr ringförmige magnetischen Kerne, die magnetisch miteinander und/oder mechanisch aneinander und/oder zu einer Kernkombination miteinander angeordnet sind. Die Kernkombination ist dann bspw. röhrenförmig, also aus mehreren, aneinander angeordneten Ringen, ausgebildet.

Die Kernkombination weist dabei ebenfalls eine Öffnung auf, durch die Phasen und Leiter geführt werden können.

Bevorzugt werden die ringförmigen, magnetischen Kerne auch als Ringkerne bezeichnet.

Vorzugsweise weist die Filteranordnung eine Induktivität zwischen 1 µH und 1000 µH auf und/oder der magnetische Kern eine Permeabilität zwischen 100 H*m⁻¹ und 20000 H*m⁻¹.

Besonders bevorzugt liegt die Induktivität der Filteranordnung zwischen 10 µH und 500 µH.

Besonders bevorzugt liegt die Permeabilität des magnetischen Kernes zwischen 700 H*m⁻¹ und 10000 H*m⁻¹.

Die Filteranordnung bzw. der magnetische Kern sind somit bevorzugt für Umrichteranordnungen von Windenergieanlagen optimiert.

Vorzugsweise umfasst die Filteranordnung ferner eine Kapazität für die erste Phase, wobei die Kapazität als Endstörkondensator ausgebildet ist und/oder in Stromflussrichtung hinter dem magnetischen Kern angeordnet ist.

Die Kapazität ist also bspw. als X-Kondensator oder als Y-Kondensator ausgebildet. Die Kapazität kann auch aus mehreren Kondensatoren ausgebildet sein, die in Reihe oder parallel miteinander verschaltet sind.

Bevorzugt weist die Kapazität zwischen 10 nF und 10µF auf.

Weiter bevorzugt weist die Kapazität zwischen 100 nF und 2µF auf.

Vorzugsweise umfasst die Filteranordnung ferner eine Kapazität für den ersten Leiter, wobei die Kapazität als Endstörkondensator ausgebildet ist und/oder in Stromflussrichtung vor oder hinter dem magnetischen Kern angeordnet ist.

Bevorzugt ist die Kapazität in Stromflussrichtung hinter dem magnetischen Kern angeordnet.

Die Kapazität ist also bspw. als X-Kondensator oder als Y-Kondensator ausgebildet. Die Kapazität kann auch aus mehreren Kondensatoren ausgebildet sein, die in Reihe und/oder parallel miteinander verschaltet sind.

Bevorzugt weist die Kapazität zwischen 10 nF und 10µF auf.

Weiter bevorzugt weist die Kapazität zwischen 100 nF und 2µF auf.

Es wird also insbesondere auch vorgeschlagen für die Netzdrossel und die Gleichtaktdrossel einen gemeinsamen magnetischen Kern aber getrennte Kapazitäten zu verwenden.

Vorzugsweise ist die Filteranordnung als EMV-Filter ausgebildet und/oder dazu eingerichtet, hochfrequente Störungen aus einem, von dem Umrichtermodul erzeugten Wechselstrom heraus zu filtern.

Die Filteranordnung ist also insbesondere dazu eingerichtet, eine elektromagnetische Verträglichkeit (kurz: EMV) des Umrichtermoduls gegenüber einem elektrischen Versorgungsnetz herzustellen.

Umrichtermodule, insbesondere Leistungsumrichtermodule bei Windenergieanlagen, weisen Schaltfrequenzen im Kilohertz-Bereich auf, die üblicherweise auch im erzeugten Wechselstrom der Umrichtermodule zu erkennen sind. Derartige Störungen liegen im kHz- bzw. MHz-Bereich, bspw. zwischen 150 kHz bis 1 GHz.

Die Filteranordnung ist alternativ oder zusätzlich auch dazu eingerichtet, Oberwellen bzw. Oberschwingungen des erzeugten Wechselstromes im Bereich von Vielfachen der Netzfrequenz herauszufiltern.

Bspw. beträgt die Netzfrequenz 50 Hz. Dann ist die Filteranordnung dazu gerichtet, Frequenzen von ganzen Vielfachen von 50 Hz zu filtern, also bspw. im Bereich von 50 Hz, 100 Hz, 150 Hz, etc.

Vorzugsweise weist das Umrichtermodul wenigstens eine Nennleistung von 300 kW, bevorzugt wenigstens 600 kW, auf und die Filteranordnung ist für diese Nennleistung bzw. einen, aus diesem Umrichtermodul erzeugten Strom ausgelegt ist.

Alternativ oder bevorzugt ist das Umrichtermodul dazu eingerichtet, über 1000 A, bspw. 1250 A, zuführen, bevorzugt bei einer Gleichspannung von mehr als 700 V.

Vorzugsweise weist der magnetische Kern eine Bemaßung auf, die eine Anordnung in einem Schaltschrank ermöglicht.

Der magnetische Kern weist also bspw. einen (Außen-)Durchmesser von unter 200 mm auf.

Vorzugsweise weist die Filteranordnung eine Halterung auf, die dazu eingerichtet ist, den magnetischen Kern horizontal in einem Schaltschrank zu befestigen, insbesondere so, dass die wenigstens eine Phase senkrecht zum Schaltschrank durch die Öffnung verläuft.

Erfindungsgemäß wird ferner ein Umrichtermodul einer Windenergieanlage vorgeschlagen, wenigstens umfassend einen Anschluss zum Verbinden des Umrichtermoduls mit einer Gleichspannung; ein, mit dem Anschluss verbundenes Wechselrichtermodul, und ein, mit dem Wechselrichtermodul verbundener Umrichterausgang, wobei am Umrichterausgang wenigstens eine vorstehend oder nachstehend beschriebene Filteranordnung angeordnet ist.

Das Umrichtermodul ist also insbesondere als Wechselrichter ausgebildet.

Der Wechselrichter wird zudem bevorzugt aus einer Gleichspannung gespeist und ist an seinem Ausgang mit einer vorstehend oder nachstehend beschriebenen Filteranordnung verbunden.

Bevorzugt ist das Umrichtermodul dabei als Wechselrichtemodul eines Direktumrichters ausgebildet.

Es wird also insbesondere auch vorgeschlagen, eine vorstehend oder nachstehend beschriebene Filteranordnung pro Umrichtermodul zu verwenden.

Das Umrichtermodul ist bevorzugt zudem in einem Schaltschrank, bspw. in einem Stand- bzw. Anreihschrank mit den Maßen 800 mm x 2000 mm x 600 mm, angeordnet. Der Schaltschrank kann aber auch 700mm x 1800 mm x 600 mm oder 600 mm x 2000 mm x 600 mm sein.

Bevorzugt weist das Umrichtermodul ferner wenigstens einen Umrichterausgang auf, der mit einem elektrischen Versorgungsnetz verbindbar ist, insbesondere um elektrische Leistung mit dem elektrischen Versorgungsnetz auszutauschen.

Bevorzugt ist der Umrichterausgang des Umrichtermoduls 3-phasig ausgebildet. Das Umrichtermodul weist also insbesondere an dem Umrichterausgang wenigstens drei Phasen auf, die mit einem Wechselstrom beaufschlagt sind und mit einem elektrischen Versorgungsnetz verbunden werden können.

Eben jene Phasen des Umrichtermoduls sind am Umrichterausgang durch die Öffnung der vorstehend oder nachstehend beschriebenen Filteranordnung geführt.

Vorzugsweise werden drei Phasen des Wechselrichtermoduls und zwei Leiter der Gleichspannung durch die Öffnung geführt, insbesondere gleichsinnig.

Vorzugsweise weist das Umrichtermodul wenigstens eine Nennleistung von 600 kW auf.

Bevorzugt ist das Umrichtermodul Teil eines back-to-back- oder B2B- oder Direktumrichters, oder als dieser ausgebildet.

Vorzugsweise ist das Umrichtermodul in einem Schaltschrank untergebracht.

Unter einem Schaltschrank werden hierin insbesondere Schränke verstanden, die elektrische und elektronische Komponenten einer verfahrenstechnischen Anlage, insbesondere einer Windenergieanlage, beherbergen. Die Schränke sind dabei bevorzugt aus lackiertem bzw. pulverbeschichteten Stahlblech oder dergleichen gefertigt und als Stand- bzw. Anreihschrank ausgeführt, insbesondere mit einer Bemaßung zwischen 600 mm und 1200 mm Breite, zwischen 1600 und 2200 mm Höhe und zwischen 400 mm und 800 mm Tiefe.

Erfindungsgemäß wird ferner eine Umrichteranordnung für eine Windenergieanlage vorgeschlagen, wenigstens umfassend eine Vielzahl von vorstehend oder nachstehend beschriebenen Umrichtermodulen, wobei die Vielzahl der Umrichtermodule parallel miteinander verschaltet sind, insbesondere so, dass die Umrichteranordnung eine höhere Nennleistung aufweist als ein Umrichtermodul oder eine Nennleistung aufweist, die im Wesentlichen der Summe der Nennleistung der Umrichtermodule entspricht.

Die Umrichteranordnung ist dabei bevorzugt als Leistungsumrichter einer Windenergieanlage ausgebildet, d.h. die gesamte, vom Generator der Windenergieanlage erzeugte Leistung wird über diese Umrichteranordnung geführt.

Die Umrichteranordnung ist also bevorzugt mit dem Generator der Windenergieanlage und einem elektrischen Versorgungsnetz verbunden und umfasst eine Vielzahl von vorstehend oder nachstehend beschriebenen Umrichtermodulen, die parallel miteinander verschaltet sind.

Die vorstehend oder nachstehend beschriebene Filteranordnung ist dabei insbesondere besonders unanfällig gegenüber Ringströmen einer solchen Umrichteranordnung. Insbesondere können die vorstehend oder nachstehend beschriebenen Filteranordnungen nicht in die Sättigung durch etwaige Ringströme einer solchen Umrichteranordnung getrieben werden.

Erfindungsgemäß wird ferner eine Windenergieanlage mit einer vorstehend oder nachstehend beschriebenen Umrichteranordnung vorgeschlagen.

Die Windenergieanlage ist dabei bevorzugt dazu eingerichtet, mit einem Windparknetz oder einem elektrischen Versorgungsnetz verbunden zu werden, insbesondere über einen Transformator.

Die Umrichteranordnung weist zudem insbesondere eine Vielzahl von vorstehend oder nachstehend beschriebenen Umrichtermodulen auf, die parallel miteinander verschaltet sind.

Die Umrichteranordnung ist ferner bevorzugt als Leistungsumrichter ausgebildet.

Die vorliegende Erfindung wird nun nachfolgend anhand der begleitenden Figuren näher erläutert, wobei für gleiche oder ähnliche Bauteile oder Baugruppen dieselben Bezugszeichen verwendet werden.
- Fig. 1: zeigt schematisch und exemplarisch eine perspektivische Ansicht einer Windenergieanlage in einer Ausführungsform.
- Fig. 2: zeigt schematisch und exemplarisch einen Aufbau eines elektrischen Stranges einer Windenergieanlage in einer Ausführungsform.
- Fig. 3: zeigt schematisch und exemplarisch den Aufbau einer Umrichteranordnung.
- Fig. 4: zeigt schematisch und exemplarisch eine Filteranordnung.
- Fig. 5: zeigt schematisch und exemplarisch eine Filteranordnung in einem unteren Bereich eines Schaltschrankes.
- Fig. 6: zeigt schematisch und exemplarisch eine Umrichteranordnung.

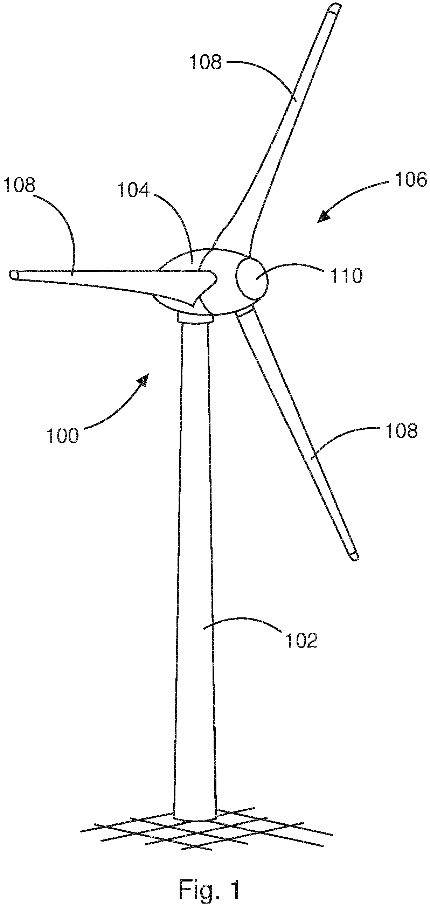

Fig. 1 zeigt eine perspektivische Ansicht einer Windenergieanlage 100.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel an. Der Generator erzeugt hierdurch einen einzuspeisenden Strom, der mittels einer Umrichteranordnung in ein elektrisches Versorgungnetz eingespeist wird.

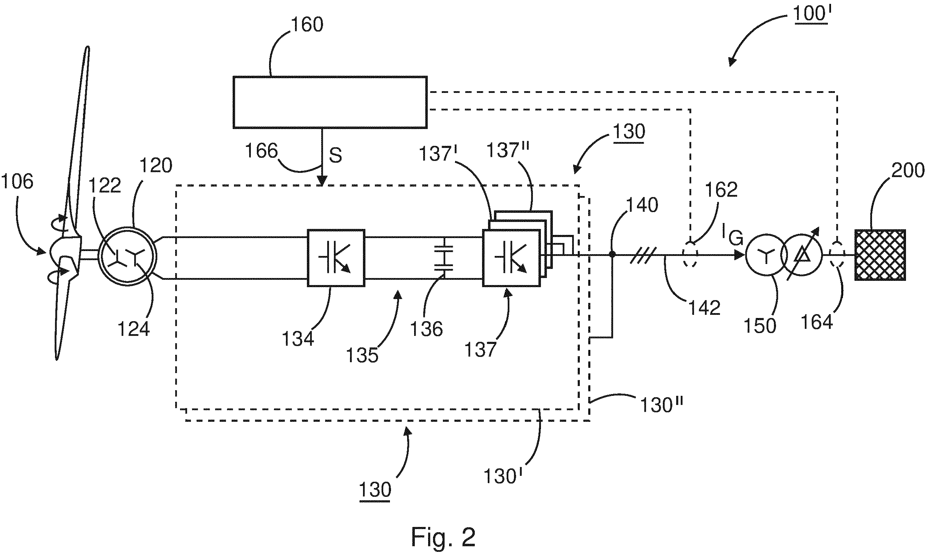

Fig. 2 zeigt schematisch und exemplarisch einen elektrischen Strang 100' einer Windenergieanlage 100, wie bevorzugt in Figur 1 gezeigt.

Der aerodynamische Rotor der Windenergieanlage 106 ist mit dem Generator 120 der Windenergieanlage verbunden.

Bevorzugt ist der Generator 120 dabei als sechsphasiger Generator ausgebildet, bspw. weist der Generator zwei statorseitig voneinander entkoppelte, elektrisch dreiphasige Systeme 122, 124 auf.

Der Generator 120 ist ferner über eine Umrichteranordnung 130 mittels eines Transformators 150 mit einem elektrischen Versorgungsnetz 200 verbunden bzw. an das elektrische Versorgungsnetz 200 angeschlossen.

Um die vom Generator 120 erzeugte elektrische Leistung in einen einzuspeisenden Strom iG umzuwandeln, weist die Umrichteranordnung 130 eine Vielzahl von parallel geschalteten Umrichtermodulen 130', 130" auf, die im Wesentlichen baugleich ausgeführt sind.

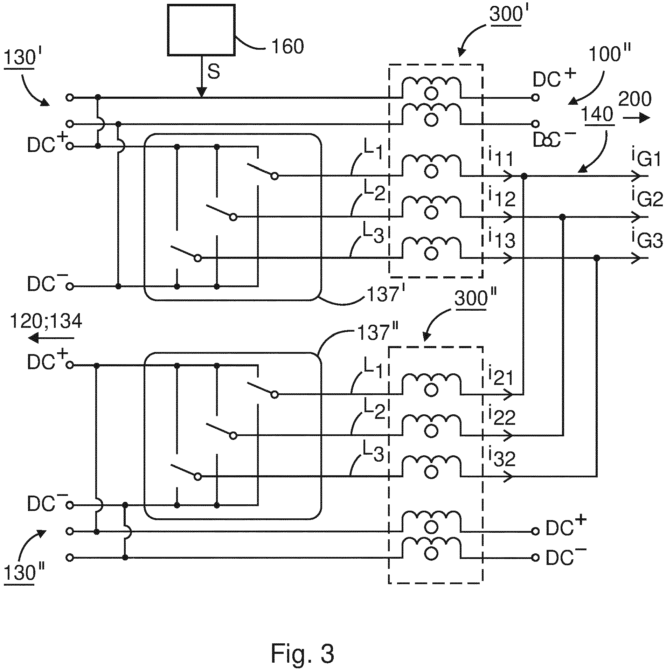

Die Umrichtermodule 130', 130" weisen an einem Umrichtermoduleingang einen aktiven Gleichrichter 134 auf. Der aktive Gleichrichter 134 ist bspw. mit einem Gleichspannungszwischenkreis 135 verbunden, der bspw. Kondensatoren 136 zur Speicherung oder Glättung aufweist. Der aktive Gleichrichter 134 ist über den Zwischenkreis 135 mit dem Wechselrichter137 verbunden. Der Wechselrichter 137 besteht dabei aus einer Vielzahl von Wechselrichtermodulen 137', 137", 137"', wie bspw. in Fig. 3 gezeigt, und erzeugt einen einzuspeisenden Gesamtstrom iG. In einer anderen Ausführungsform kann auch der Gleichrichter 132 modular aufgebaut sein, d.h. aus mehreren parallelen Gleichrichtermodulen bestehen, und/oder der Umrichter als back-to-back Umrichter oder Direktumrichter, d.h. ohne Zwischenkreis, ausgeführt sein.

Die Umrichtermodule 130, 130" werden netzseitig an einem Knotenpunkt 140 zu einem dreiphasigen Gesamtsystem 142 zusammengeführt, wie bspw. in Fig. 3 gezeigt.

Um den einzuspeisenden Gesamtstrom iG in das elektrische Versorgungnetz 200 einzuspeisen, ist ferner am Ausgang der Windenergieanlage ein Windenergieanlagentransformator 150 vorgesehen, der bevorzugt im Stern-Dreieck geschaltet ist und die Windenergieanlage 100 mit dem elektrischen Versorgungsnetz 200 verbindet.

Das elektrische Versorgungsnetz 200, an das die Windenergieanlage 100, 100' mittels des Transformators 150 angeschlossen ist, kann beispielsweise ein Windparknetz oder ein elektrisches Versorgungs- oder Verteilnetz sein.

Zum Steuern der Windenergieanlage 100 bzw. des elektrischen Stranges 100' ist ferner eine Windenergieanlagensteuereinheit 160 vorgesehen.

Die Windenergieanlagensteuereinheit 160 ist dazu eingerichtet, den Gesamtstrom iG mittels eines Stromerfassungsmittels 162 zu erfassen. Bevorzugt werden hierfür insbesondere die Ströme eines jeden Umrichtermoduls 137' in jeder Phase erfasst.

Zudem weist die Steuereinheit auch Stromerfassungsmittel 162 auf.

Die Steuereinheit 1000 ist also insbesondere dazu eingerichtet, den gesamten Umrichter 130 mit seinen zwei Umrichtermodulen 130', 130"zu steuern, insbesondere wie in Fig. 3 gezeigt.

Fig. 3 zeigt schematisch und exemplarisch den Aufbau einer Umrichteranordnung 137', 137" mit einer Filteranordnung.

Die Umrichteranordnung 130', 130" ist generatorseitig mit einer Gleichspannung U_DC verbunden und netzseitig mit einem elektrischen Versorgungsnetz 200 verbunden.

Die Umrichteranordnung 130', 130" besteht aus einem ersten Wechselrichtermodul 137' und einem zweiten Wechselrichtermodul 137", die parallel miteinander verschaltet sind.

Die Wechselrichtermodule 137', 137" erzeugen jeweils einen Wechselstrom i11, i12, i13, i21, i22, 23 der auf jeweils drei Phasen L1, L2, L3 geführt und im Knotenpunkt 140 zu einem einzuspeisenden, dreiphasigen Gesamtstrom ig1, ig2, ig3 überlagert wird.

Die Umrichteranordnung 130', 130" wird bspw. mittels einer Windenergieanlagensteuereinheit 160 und Schaltsignalen S gesteuert.

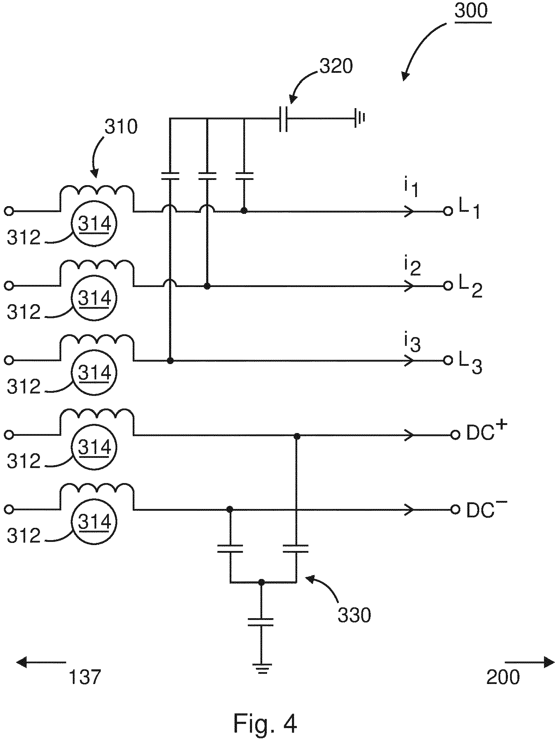

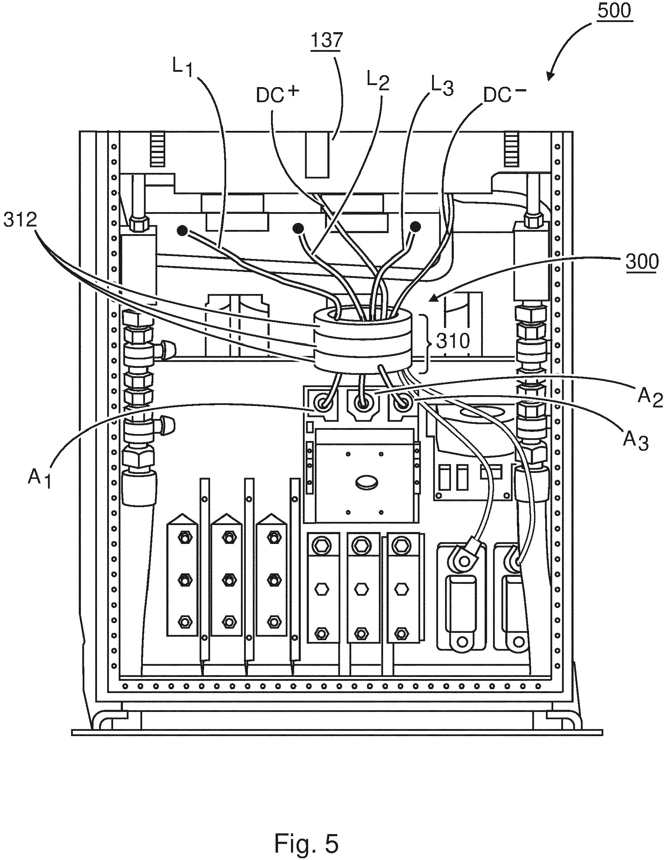

Am Ausgang der Wechselrichtermodule 137', 137" ist jeweils eine vorstehend oder nachstehend beschriebene Filteranordnung 300', 300" angeordnet, die insbesondere wie in Fig. 4 und/oder Fig. 5 beschrieben, ausgeführt sind.

Fig. 4 zeigt schematisch und exemplarisch eine Filteranordnung 300, insbesondere zwischen einem Wechselrichtermodul 137 und einem elektrischen Versorgungsnetz 200.

Die Filteranordnung 300 umfasst einen magnetischen Kern 310, eine Wechselstrom-Kapazität 320 und eine Gleichspannungs-Kapazität 330.

Der magnetische Kern 310 ist mehrteilig als Kernkombination 312 ausgeführt und umfasst eine Öffnung 314.

Durch die Öffnung 314 werden die drei Phasen L1, L2, L3 des Wechselrichtermoduls 137 und die zwei Leiter DC+, DC- einer Gleichspannung für das Wechselrichtermodul 137 geführt, insbesondere so, dass die Filteranordnung sowohl eine Netzdrossel als auch eine Gleichtaktdrossel ausbildet.

In Stromflussrichtung hinter dem magnetischen Kern 310 sind zudem eine Wechselstrom-Kapazität 320 und eine Gleichspannungs-Kapazität 330 angeordnet.

Fig. 5 zeigt schematisch und exemplarisch eine Filteranordnung 300 in einem unteren Bereich eines Schaltschrankes 500.

Das Umrichtermodul 137 ist mittig im Schaltschrank angeordnet und weist drei Phasen L1, L2, L3 auf, die mittels Klemmen A1, A2, A3 mit einem elektrischen Versorgungsnetz verbunden sind.

Das Umrichtermodul 137 ist mit einer Gleichspannung für das Umrichtermodul 137 verbunden, die über zwei Leiter DC+, DC- geführt ist.

Sowohl die Phasen L1, L2, L3 als auch die Leiter DC+, DC- sind durch eine Öffnung 314 im magnetischen Kreis 310 geführt.

Der magnetische Kreis 310 ist als Kernkombination aus drei ferritmagnetischen Ringen 312 ausgebildet, die sowohl mechanisch als auch magnetisch miteinander gekoppelt sind.

Die Filteranordnung 300 ist somit aus elektrischer Sicht netzseitig, also in Stromflussrichtung hinter dem Umrichtermodul 137, angeordnet.

Die Gleichspannung U_{DC} kommt aus dem Zwischenkreis 135, ist also aus elektrischer Sicht generatorseitig, also in Stromflussrichtung vor dem Umrichtermodul 137, angeordnet.

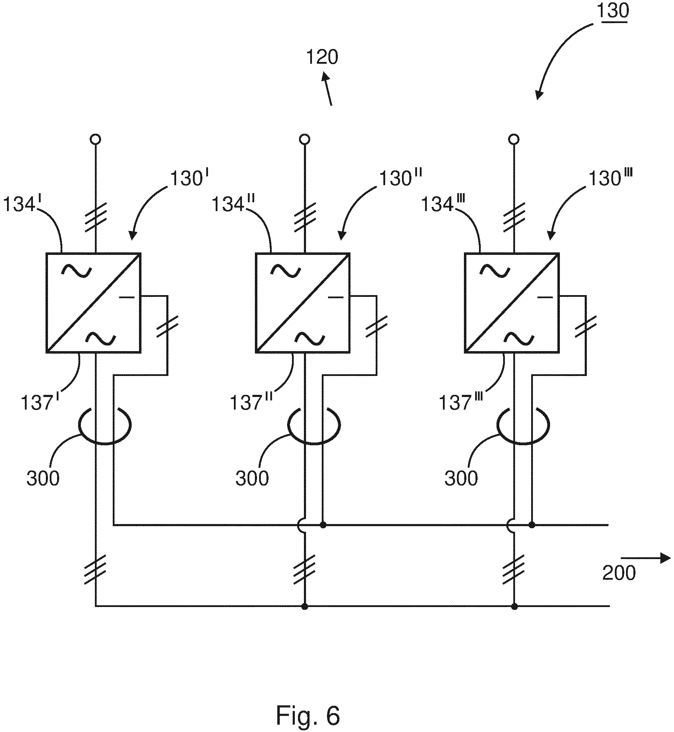

Fig. 6 zeigt schematisch und exemplarisch eine Umrichteranordnung 130.

Die Umrichteranordnung 130 ist mit einem Generator 120 einer Windenergieanlage und einem elektrischen Versorgungsnetz 200 verbunden.

Die Umrichteranordnung 130 umfasst drei Umrichtermodule 130', 130", 130"', die parallel miteinander verschaltet sind.

Die Umrichtermodule 130', 130", 130'" sind als back-to-back-Umrichter ausgebildet und umfassen einen, mit dem Generator verbundenen aktiven Gleichrichter 134', 134", 134'" und einen, mit dem elektrischen Versorgungsnetz verbundenen Wechselrichter 137', 137", 137"', die über einen Gleichspannungszwischenkreis verbunden sind.

Am Ausgang jedes Umrichtermoduls 130', 130", 130'" ist eine vorstehend oder nachstehend beschriebene Filteranordnung 300 angeordnet.

Die Filteranordnungen 300 weisen jeweils eine Öffnung innerhalb eines magnetischen Kernes auf, durch die Gleichspannung des Gleichspannungszwischenkreises und der Ausgang des Wechselrichters 137', 137", 137'" geführt wird.

Die Filteranordnungen 300 sind insbesondere wie vorstehend oder nachstehend beschrieben ausgeführt.

Die Filteranordnungen 300 sind dabei insbesondere dazu eingerichtet, die Kreisströme innerhalb der Umrichteranordnung 130 zu minimieren und/oder eine Sättigung der Ringkerne der Filteranordnung zu verhindern.

Die hierin vorgeschlagene Filteranordnung ermöglicht dabei insbesondere:
- eine Kompensation der Kreisströme und damit verbunden eine deutlich spätere Sättigung der Ringkerne;
- eine Möglichkeit kleinere Ringkerne zu verwenden, was zu Platzersparnis innerhalb der Schaltschränke führt;
- eine Möglichkeit der Filterung mit Ferritkernen, wo sonst nanokristallines Material erforderlich wäre; und
- eine geringere Kreisstrombelastung des restlichen Systems, insbesondere des elektrischen Systems der Windenergieanlage.

### Bezugszeichenliste

- 100: Windenergieanlage
- 100': elektrischer Strang, insbesondere der Windenergieanlage
- 100": Ausschnitt des elektrischen Stranges
- 102: Turm, insbesondere der Windenergieanlage
- 104: Gondel, insbesondere der Windenergieanlage
- 106: Rotor, insbesondere der Windenergieanlage
- 108: Rotorblatt, insbesondere der Windenergieanlage
- 120: Generator, insbesondere der Windenergieanlage
- 122: erstes elektrisches System, insbesondere des Generators
- 124: zweites elektrisches System, insbesondere des Generators
- 130: Umrichteranordnung, insbesondere der Windenergieanlage
- 130': Umrichtermodul, insbesondere für das erste elektrische System
- 130": Umrichtermodul, insbesondere für das zweite elektrische System
- 134: aktiver Gleichrichter, insbesondere des Umrichtermoduls
- 135: Gleichspannungszwischenkreis, insbesondere des Umrichtermoduls
- 136: Kondensator, insbesondere des Gleichspannungszwischenkreises
- 137: Wechselrichter
- 137': Wechselrichtermodul
- 137": Wechselrichtermodul
- 137''': Umrichtersubmodul, insbesondere Wechselrichtermodul
- 140: Knotenpunkt
- 142: dreiphasiges (Gesamt-)System
- 150: Transformator
- 160: Windenergieanlagensteuereinheit
- 162: Stromerfassungsmittel
- 200: elektrisches Versorgungsnetz

- 300: Filteranordnung
- 310: magnetischer Kern
- 312: Kernkombination
- 312': ferro- oder ferritmagnetischer Ring, insbesondere Kernkombination
- 320: Wechselstrom-Kapazität
- 330: Gleichspannungs-Kapazität
- 500: Schaltschrank
- L1, L2, L3: Phasen eines Umrichtermoduls
- DC+, DC-: Leiter einer Gleichspannung

- i_{G}: einzuspeisender Gesamtstrom
- U_{DC}: Gleichspannung
- u: Spannung einer Phase
- i: Strom einer Phase
- S: (Schalt-)Signal

- 1,2,3: Indizes

## Patentansprüche

1. Filteranordnung für ein Umrichtermodul, insbesondere für ein Leistungsumrichtermodul einer Windenergieanlage, umfassend:
- einen magnetischen Kern, der
- ring- oder röhrenförmig, mit einer Öffnung, und
- aus wenigstens einem ferro- oder ferrimagnetischen Stoff ausgebildet ist, wobei
- der magnetische Kern dazu eingerichtet ist, wenigstens
- eine erste Phase des Umrichtermoduls und einen ersten Leiter einer Gleichspannung für das Umrichtermodul derart durch die Öffnung hindurch aufzunehmen, dass der magnetische Kern eine Drossel für das Umrichtermodul und eine Drossel für die Gleichspannung ausbildet.

2. Filteranordnung nach Anspruch 1, wobei
- der magnetische Kern dazu eingerichtet ist, eine erste Phase, eine zweite Phase und eine dritte Phase des Umrichtermoduls und einen ersten Leiter und einen zweiten Leiter der Gleichspannung für das Umrichtermodul derart durch die Öffnung hindurch aufzunehmen, dass der magnetische Kern eine Drossel für das Umrichtermodul und eine Drossel für die Gleichspannung ausbildet.

3. Filteranordnung nach Anspruch 1 oder 2, wobei
- der magnetische Kern als Kernkombination, insbesondere mehrteilig, ausgebildet ist.

4. Filteranordnung nach wenigstens einem der vorstehenden Ansprüche, wobei
- die Filteranordnung eine Induktivität zwischen 1 µH und 1000 µH aufweist und/oder der magnetische Kern eine Permeabilität zwischen 100 H*m⁻¹ und 20000 H*m⁻¹.

5. Filteranordnung nach wenigstens einem der vorstehenden Ansprüche, ferner umfassend:
- eine Kapazität für die erste Phase, wobei
- die Kapazität als Endstörkondensator ausgebildet ist und/oder
- in Stromflussrichtung hinter dem magnetischen Kern angeordnet ist.

6. Filteranordnung nach wenigstens einem der vorstehenden Ansprüche, wobei
- die Filteranordnung eine Kapazität für den ersten Leiter umfasst, wobei
- die Kapazität als Endstörkondensator ausgebildet ist und/oder
- in Stromflussrichtung hinter dem magnetischen Kern angeordnet ist.

7. Filteranordnung nach wenigstens einem der vorstehenden Ansprüche, wobei
- die Filteranordnung als EMV-Filter ausgebildet und/oder dazu eingerichtet ist, hochfrequente Störungen aus einem, von dem Umrichtermodul erzeugen Wechselstrom heraus zu filtern.

8. Filteranordnung nach wenigstens einem der vorstehenden Ansprüche, wobei
- das Umrichtermodul wenigstens eine Nennleistung von 300 kW, bevorzugt wenigstens 600 kW, aufweist und die Filteranordnung für diese Nennleistung bzw. einen, aus diesem Umrichtermodul erzeugten Strom ausgelegt ist.

9. Filteranordnung nach wenigstens einem der vorstehenden Ansprüche, wobei
- der magnetische Kern eine Bemaßung aufweist, die eine Anordnung in einem Schaltschrank ermöglichen und/oder
- die Filteranordnung eine Halterung aufweist, die dazu eingerichtet ist, den magnetischen Kern im horizontal in einem Schaltschrank zu befestigen, insbesondere so, dass die wenigstens eine Phase senkrecht durch die Öffnung verläuft.

10. Umrichtermodul einer Windenergieanlage, wenigstens umfassend:
- einen Anschluss zum Verbinden des Umrichtermoduls mit einer Gleichspannung;
- ein, mit dem Anschluss verbundenes Wechselrichtermodul, und
- ein, mit dem Wechselrichtermodul verbundener Umrichterausgang, wobei
- am Umrichterausgang wenigstens eine Filteranordnung nach einem der Ansprüche 1 bis 9 angeordnet ist.

11. Umrichtermodul einer Windenergieanlage nach Anspruch 10, wobei
- drei Phasen des Wechselrichtermoduls und zwei Leiter der Gleichspannung durch die Öffnung geführt werden.

12. Umrichtermodul einer Windenergieanlage nach wenigstens einem der Ansprüche 10 oder 11, wobei
- das Umrichtermodul wenigstens eine Nennleistung von 600 kW aufweist.

13. Umrichtermodul einer Windenergieanlage nach wenigstens einem der Ansprüche 10 bis 12, wobei
- das Umrichtermodul in einem Schaltschrank untergebracht ist.

14. Umrichteranordnung für eine Windenergieanlage, wenigstens umfassend:
- eine Vielzahl von Umrichtermodulen nach wenigstens einem der Ansprüche 10 bis 13, wobei die Vielzahl der Umrichtermodule parallel miteinander verschaltet sind.

15. Windenergieanlage, wenigstens umfassend:
- eine Umrichteranordnung nach Anspruch 14.
